# EUROPEAN PATENT APPLICATION

(11) **EP 4 707 900 A1**
(43) Date of publication of application: **11.03.2026**
(21) Application number: 25184209.2
(22) Date of filing: 20.06.2025
(51) Int. Cl.: G02B 26/08, H04N 23/58

(54) **ELECTRONIC DEVICE FOR CAPTURING IMAGES AND/OR VIDEOS**

(30) Priority: 10.09.2024 IT 202400020164
(71) Applicant: FuzzyWaves S.r.l., 20025 Legnano (IT)
(72) Inventor: BAITINI, Mario, 20025 Legnano (IT); LOMBARDO, Simone, 20143 Milano (IT)
(74) Representative: PGA S.p.A., Milano, Succursale di Lugano

(57) **Abstract**

Electronic device (1) for capturing images and/or videos, comprising:
- a body (2);
- at least an optical sensor (3) arranged on said body (2) and having a field of view (FOV) comprising at least a first sub-field of view (sFOV1) and a second sub-field of view (sFOV2);
- at least a first optical radiation diverter element (4), arranged in at least one first predefined position with respect to said optical sensor (3) within said field of view (FOV), in such a way to define at least one between an extension of said second sub-field of view (sFOV2) and a positional relation of said second sub-field of view (sFOV2) with respect to said first sub-field of view (sFOV1);
wherein said at least a first optical radiation diverter element (4) is configured for deviating an optical radiation (R) incident thereon in said second sub-field of view (sFOV2) and wherein said first sub-field of view (sFOV1) is free from elements substantially deviating said optical radiation.

## Description

### Field of the technique

The present disclosure refers to the field of electronic devices for capturing images and/or videos, and to the field of processes of image processing.

### Background art

Electronic devices for capturing images and/or videos are widely widespread, and are for example used on road vehicles or in urban, industrial environments or for defense applications.

In the specific application on road vehicles, the electronic devices for capturing images and/or videos are used to frame front, or side or rear scenes of the vehicle, and are for example useful in the event of accidents to help the police or insurance companies understand the dynamics of the accident and/or to determine liabilities.

In the specific application on road vehicles, the electronic devices for capturing images and/or videos are also used to reduce the presence of blind spots in the field of view of the pilot, for example compensating for the presence of uprights and/or the limitation of the field of view made possible by mirrors of the vehicle.

Typically in order to capture different viewing directions, multiple electronic devices are used, which transmit the images to a monitor on board of the vehicle, which combines the images coming from the plurality of electronic devices.

In urban environments are widespread cameras with wide-angle optics or tiltable cameras, configured for framing scenes on a wide angle of image capturing. The cameras can be installed in single units or in groups.

WO2022144588A1 discloses a LIDAR system with automatic correction of rolling and yaw. The system comprises a light source, a light deflector and a sensor unit. Such document discloses as "first FOV" the field of view that can be overall scanned by means of the LIDAR, while discloses as "second FOV" the field of view of the sensor.

### Summary

The Applicant has noted that is possible to reduce the cost deriving from the use of multiple electronic devices for capturing different observation directions, even in difficult situations and/or behind corners, by using a device for capturing images and/or videos in accordance to the present disclosure.

Such device is herein described in some main aspects thereof, which can be combined among them or with portions of the detailed description and/or of the claims.

In accordance to a first independent aspect, is herein described an electronic device (1) for capturing images and/or videos, comprising:
- a body (2);
- at least an optical sensor (3) arranged on said body (2) and having a field of view (FOV) comprising at least a first sub-field of view (sFOV1) and a second sub-field of view (sFOV2);
- at least a first optical radiation diverter element (4), arranged in at least one first predefined position with respect to said optical sensor (3) within said field of view (FOV), in such a way to define at least one between an extension of said second sub-field of view (sFOV2) and a positional relation of said second sub-field of view (sFOV2) with respect to said first sub-field of view (sFOV1);
wherein said at least a first optical radiation diverter element (4) is configured for deviating an optical radiation (R) incident thereon in said second sub-field of view (sFOV2) and wherein said first sub-field of view (sFOV1) is free from elements substantially deviating said optical radiation.

In accordance to a further independent aspect, is herein described a method of acquisition of images and/or videos comprising using an electronic device (1) for capturing images and/or videos, optionally an electronic device (1) in accordance to one or more of the aspects herein described, comprising:
- arranging a body (2), comprising at least an optical sensor (3) having a field of view (FOV) comprising at least a first sub-field of view (sFOV1) and a second sub-field of view (sFOV2), in at least one first predefined position;
- arranging at least a first optical radiation diverter element (4), in at least one first predefined position with respect to said optical sensor (3) within said field of view (FOV), in such a way to define at least one between an extension of said second sub-field of view (sFOV2) and a positional relation of said second sub-field of view (sFOV2) with respect to said first sub-field of view (sFOV1);
- deviating an optical radiation incident on the first optical radiation diverter element (4) in said second sub-field of view (sFOV2) keeping said first sub-field of view (sFOV1) free from elements substantially deviating said optical radiation.

According to a further non-limiting aspect, said at least one predefined position is in correspondence of at least one predefined portion of a vehicle and/or is a portion such that said optical sensor (3) can capture surrounding images of a portion surrounding the vehicle.

According to a further non-limiting aspect, said at least one predefined position is a position in a predefined environment, preferably in correspondence of, or inside, a building.

According to a further non-limiting aspect, said at least a first optical radiation diverter element (4) is arranged at a predefined distance with respect to said optical sensor (3) and is configured for attenuating, preferably for blocking, the optical radiations that, in said second sub-field of view (sFOV2), preferably along a first directrix (D1) intersecting said at least a first optical radiation diverter element (4) in correspondence of a first surface (4f) thereof and joined with said optical sensor (3) in said second sub-field of view (sFOV2), come from a distance greater with respect to said predefined distance.

According to a further non-limiting aspect, said method comprises arranging said at least a first optical radiation diverter element (4) at a predefined distance with respect to said optical sensor (3) and comprises attenuating, preferably blocking, by means of said at least a first optical radiation diverter element (4), the optical radiations that, in said second sub-field of view (sFOV2), preferably along a first directrix (D1) intersecting said at least a first optical radiation diverter element (4) in correspondence of an its first surface (4f) and joined with said optical sensor (3) in said second sub-field of view (sFOV2), come from a distance greater with respect to said predefined distance.

According to a further non-limiting aspect, said at least a first optical radiation diverter element (4) is configured for allowing to capture optical radiations coming from directions outside said field of view (FOV).

According to a further non-limiting aspect, arranging said at least a first optical radiation diverter element (4) in at least one first predefined position with respect to said optical sensor (3) determines the possibility to receive, on said optical sensor (3), optical radiations (R) coming from directions outside said field of view (FOV).

According to a further non-limiting aspect, said at least a first optical radiation diverter element (4) is non-prismatic, and/or is fully reflecting.

According to a further non-limiting aspect, said at least a first optical radiation diverter element (4) is configured for reflecting the optical radiations that, in said second sub-field of view (sFOV2), come from along a second directrix (D2) intersecting said at least a first optical radiation diverter element (4) in correspondence of a second surface (4r) thereof different, in particular inclined or opposed, with respect to said first surface (4f), optionally wherein said second directrix (D2) does not intersect said optical sensor (3).

According to a further non-limiting aspect, the method comprises reflecting, by means of the first optical radiation diverter element (4), the optical radiations that, in said second sub-field of view (sFOV2), come along a second directrix (D2) intersecting said at least a first optical radiation diverter element (4) in correspondence of a second surface (4r) thereof different, in particular inclined or opposed, with respect to said first surface (4f), optionally wherein said second directrix (D2) does not intersect said optical sensor (3).

According to a further non-limiting aspect, said electronic device (1) is configured for allowing a relative rotation and/or relative translation motion between said at least a first optical radiation diverter element (4) and said optical sensor (3).

According to a further non-limiting aspect, the method comprises relatively rotating, or relatively translating, said at least a first optical radiation diverter element (4) and said optical sensor (3).

According to a further non-limiting aspect, said at least a first optical radiation diverter element (4) is configured for performing a rotation and/or translation motion with respect to said optical sensor (3), or said at least a first optical radiation diverter element (4) is arranged at a positional relation fixed with respect to said optical sensor (3).

According to a further non-limiting aspect, the method comprises performing a rotation and/or translation motion between said at least a first optical radiation diverter element (4) and said optical sensor (4), or comprises arranging said at least a first optical radiation diverter element (4) in a positional relation fixed with respect to said optical sensor (3).

According to a further non-limiting aspect, said rotation and/or translation motion determines at least one between a variation of an angular width of said second sub-field of view (sFOV2) and/or a variation of a positional relation between said second sub-field of view (sFOV2) and said first sub-field of view (sFOV1) and/or a variation of an angular width of said first sub-field of view (sFOV1).

According to a further non-limiting aspect, said field of view (FOV) comprises a central portion (C), optionally a central axis (X).

According to a further non-limiting aspect, said first sub-field of view (sFOV1) and said second sub-field of view (sFOV2) are joined in correspondence of said central portion (C), optionally of said central axis (X).

According to a further non-limiting aspect, said first sub-field of view (sFOV1) comprises said central portion (C), optionally said central axis (X).

According to a further non-limiting aspect, said first sub-field of view (sFOV1) and said second sub-field of view (sFOV2) are comprised in a dimensional ratio between 1:4 and 4:1 and/or are symmetrical with respect to said central portion (C), optionally with respect to said central axis (X).

According to a further non-limiting aspect, said at least a first optical radiation diverter element (4) is arranged frontally with respect to said optical sensor (3), and is configured for reflecting optical radiations coming from a lateral and/or rear direction with respect to said optical sensor (3).

According to a further non-limiting aspect, the method comprises arranging said at least a first optical radiation diverter element (4) in front of said optical sensor (3), to determine a reflection of optical radiations coming from a lateral and/or rear direction with respect to said optical sensor (3).

According to a further non-limiting aspect, said second directrix (D2) comes from said lateral direction and/or from said rear direction.

According to a further non-limiting aspect, said field of view (FOV) comprises a third sub-field of view (sFOV3), different with respect to said first sub-field of view (sFOV1) and to said second sub-field of view (sFOV2).

According to a further non-limiting aspect, said electronic device (1) comprises a second optical radiation diverter element (4).

According to a further non-limiting aspect, said second optical radiation diverter element (4) is non-prismatic, and/or is fully reflecting.

According to a further non-limiting aspect, at least one between said first optical radiation diverter element (4) and said second optical radiation diverter element (4) is arranged along a direction sensibly inclined, optionally orthogonal, with respect to said central axis (X).

According to a further non-limiting aspect, said method comprises arranging at least one between said first optical radiation diverter element (4) and said second optical radiation diverter element (4) along a direction sensibly inclined, optionally orthogonal, with respect to said central axis (X).

According to a further non-limiting aspect, said second optical radiation diverter element (4) determines a distinction of said third sub-field of view (sFOV3), with respect to said first sub-field of view (sFOV1) and to said second sub-field of view (sFOV2).

According to a further non-limiting aspect, said method comprises providing a second optical radiation diverter element (4) in such a way to identify a third sub-field of view (sFOV3), distinguished with respect to said first sub-field of view (sFOV1) and to said second sub-field of view (sFOV2).

According to a further non-limiting aspect, said second optical radiation diverter element (4) is arranged in at least one second predefined position with respect to said optical sensor (3) into said field of view (FOV), in such a way to define at least one between an extension of said third sub-field of view (sFOV3) and a positional relation of said third sub-field of view (sFOV3) with respect to said first sub-field of view (sFOV1) and with respect to said second sub-field of view (sFOV2).

According to a further non-limiting aspect, the method comprises arranging said second optical radiation diverter element (4) in at least one second predefined position with respect to said optical sensor (3) within said field of view (FOV), in such a way to define at least one between an extension of said third sub-field of view (sFOV3) and a positional relation of said third sub-field of view (sFOV3) with respect to said first sub-field of view (sFOV1) and with respect to said second sub-field of view (sFOV2).

According to a further non-limiting aspect, said second optical radiation diverter element (4) is configured for deviating an optical radiation incident thereon in said third sub-field of view (sFOV3).

According to a further non-limiting aspect, the method comprises deviating an optical radiation incident on said second optical radiation diverter element (4) in said third sub-field of view (sFOV3).

According to a further non-limiting aspect, the device (1) comprises an optical radiation emitter, configured for emitting an optical radiation (R) at least toward said first optical radiation diverter element (4), optionally toward at least one between said first optical radiation diverter element (4) and said second optical radiation diverter element (4), in such a way said optical radiation (R) can be received by said optical sensor (3) when reflected by at least a determined object.

According to a further non-limiting aspect, an assembly formed by said optical radiation emitter and said optical sensor (3) realizes a time-of-flight camera.

According to a further non-limiting aspect, the method comprises supplying an optical radiation emitter and supplying said optical radiation emitter to emit an optical radiation (R) at least toward said first optical radiation diverter element (4), optionally toward at least one between said first optical radiation diverter element (4) and said second optical radiation diverter element (4), in such a way said optical radiation (R) can be received by said optical sensor (3) when reflected by at least a determined object.

According to a further non-limiting aspect, said optical radiation emitter is configured for emitting said optical radiation (R) in at least said first sub-field of view (sFOV1) and in said second sub-field of view (sFOV2), optionally also in said third sub-field of view (sFOV3).

According to a further non-limiting aspect, the method comprises emitting, by means of said optical radiation emitter, an optical radiation (R) in at least said first sub-field of view (sFOV1) and in said second sub-field of view (sFOV2), optionally also in said third sub-field of view (sFOV3).

According to a further non-limiting aspect, the method comprises measuring a time of flight of said optical radiation (R) by means of the assembly formed by said optical radiation emitter and said optical sensor (3).

According to a further non-limiting aspect, said optical radiation emitter comprises at least a LED or is a coherent emitter, preferably a laser.

According to a further non-limiting aspect, said optical radiation emitter is wavelength-tunable.

According to a further non-limiting aspect, said optical radiation emitter is substantially arranged in proximity of said optical sensor (3).

According to a further non-limiting aspect, the method comprises arranging said optical radiation emitter in substantial correspondence of said optical sensor (3).

In accordance to a further independent aspect is herein described a system comprising an electronic device (1) according to one or more of the aspects herein described, and a data processing unit (5) operatively connected to said optical sensor (3), preferably optically and/or electrically connected to said optical sensor (3).

According to a further non-limiting aspect, the method comprises operatively connecting a data processing unit (5) to said optical sensor (3), preferably optically and/or electrically.

According to a further non-limiting aspect, said optical sensor (3) is configured for transmitting at least image data (I).

According to a further non-limiting aspect, the method comprises transmitting image data (I) from said optical sensor (3) to said data processing unit (5).

According to a further non-limiting aspect, said image data (I) are electronic data.

According to a further non-limiting aspect, the data processing unit (5) is configured for loading and/or processing the image data (I) transmitted by said optical sensor (3).

According to a further non-limiting aspect, the method comprises loading the image data (I) transmitted by said optical sensor (3) on said data processing unit (5).

According to a further non-limiting aspect, the data processing unit (5) is configured for distinguishing, on said image data (I), at least one first zone corresponding to said first sub-field of view (sFOV1) and a second zone corresponding to said second sub-field of view (sFOV2).

According to a further non-limiting aspect, the method comprises electronically distinguishing, by means of said data processing unit (5), on said image data (I), at least one first zone corresponding to said first sub-field of view (sFOV1) and one second zone corresponding to said second sub-field of view (sFOV2).

According to a further non-limiting aspect, the data processing unit (5) is configured for performing a graphical processing of a part of said image data (I) corresponding to said second zone, preferably said graphical processing comprising at least a flipping.

According to a further non-limiting aspect, the method comprises performing, by means of said data processing unit (5), a graphical processing of a part of said image data (I) corresponding to said second zone, preferably said graphical processing comprising at least a flipping.

According to a further non-limiting aspect, said flipping comprises a flipping along a first axis, or horizontal axis, and/or a flipping along a second axis, or vertical axis.

According to a further non-limiting aspect, said graphical processing, in alternative or in combination to said flipping, comprises an image recomposition.

According to a further non-limiting aspect, said image recomposition comprises a relative displacement between at least one first zone and one second zone of a frame (F) captured by said optical sensor (3).

According to a further non-limiting aspect, said data processing unit (5) is configured for automatically identifying the presence of at least an object in correspondence of at least one between said first sub-field of view (sFOV1) and said second sub-field of view (sFOV2), preferably for automatically identifying the presence of at least an object approaching said optical sensor (3) within said first sub-field of view (sFOV1) and said second sub-field of view (sFOV2).

According to a further non-limiting aspect, said method comprises electronically identifying, by means of said data processing unit (5), the presence of at least an object in correspondence of at least one between said first sub-field of view (sFOV1) and said second sub-field of view (sFOV2), preferably for automatically identifying the presence of at least an object approaching said optical sensor (3) within said first sub-field of view (sFOV1) and said second sub-field of view (sFOV2).

According to a further non-limiting aspect, said data processing unit (5) is configured for automatically identifying the presence of said at least an object by means of an image identification algorithm, more preferably of neural network type and even more preferably of convolutional neural network (CNN) type.

According to a further non-limiting aspect, said method comprises electronically and automatically identifying, by means of said data processing unit (5), the presence of said at least an object by means of an image identification algorithm, more preferably of a neural network type and even more preferably of a convolutional neural network (CNN) type.

According to a further non-limiting aspect, said image identification algorithm is a single-stage type algorithm or is a two-stage type algorithm.

According to a further non-limiting aspect, said image data (I) are divided into a plurality of frames (F).

According to a further non-limiting aspect, the method comprises dividing said image data (I) into a plurality of frames (F).

According to a further non-limiting aspect, each frame (F) comprises at least said first zone and said second zone.

According to a further non-limiting aspect, each frame (F) is relative to a respective time instant different from the time instant of a further frame (F).

According to a further non-limiting aspect, said data processing unit (5) is configured for reading a first frame of said plurality of frames (F).

According to a further non-limiting aspect, the method comprises reading, by means of said data processing unit (5), a first frame of said plurality of frames (F).

According to a further non-limiting aspect, said data processing unit (5) is configured for distinguishing, on said first frame, a first zone of said first frame corresponding to said first sub-field of view (sFOV1) and a second zone of said first frame corresponding to said second sub-field of view (sFOV2).

According to a further non-limiting aspect, the method comprises electronically distinguishing, on said first frame and by means of said data processing unit (5), a first zone of said first frame corresponding to said first sub-field of view (sFOV1) and a second zone of said first frame corresponding to said second sub-field of view (sFOV2).

According to a further non-limiting aspect, said data processing unit (5) is configured for performing, for said second sub-field of view (sFOV2), said graphical processing on the second zone of said first frame, obtaining a first auxiliary subframe.

According to a further non-limiting aspect, the method comprises performing, by means of said data processing unit (5) and for said second sub-field of view (sFOV2), said graphical processing on the second zone of said first frame, obtaining a first auxiliary subframe.

According to a further non-limiting aspect, said data processing unit (5) is configured for composing a first secondary image having said first zone of said first frame and said first auxiliary subframe.

According to a further non-limiting aspect, the method comprises composing, by means of said data processing unit (5), a first secondary image having said first zone of said first frame and said first auxiliary subframe.

According to a further non-limiting aspect, said data processing unit (5) is configured for transmitting said first secondary image to a monitor (6) and/or determining the activation of at least one between a sound and/or light emitter, selectively according to said image data (I).

According to a further non-limiting aspect, the method comprises transmitting said first secondary image from said data processing unit (5) to a monitor (6) and/or comprises activating, by means of said data processing unit (5), at least one between a sound and/or light emitter.

According to a further non-limiting aspect, the monitor (6), and/or the at least one between a sound and/or light emitter is part of the vehicle and/or is positioned inside the vehicle and/or is positioned in such a way to be visible and/or audible for a pilot of said vehicle and/or is installed in correspondence of a building, optionally inside a building.

According to a further non-limiting aspect, said data processing unit (5) is configured for performing said image identification algorithm on said first zone of said first frame and/or said second zone of said first frame.

According to a further non-limiting aspect, the method comprises performing, by means of said data processing unit (5) the image identification algorithm on said first zone of said first frame and/or said second zone of said first frame.

According to a further non-limiting aspect, the method comprises reading, by means of said data processing unit (5), a second frame of said plurality of frames (F).

According to a further non-limiting aspect, said data processing unit (5) is configured for reading a second frame of said plurality of frames (F).

According to a further non-limiting aspect, said data processing unit (5) is configured for distinguishing, on said second frame, a first zone of said second frame corresponding to said first sub-field of view (sFOV1) and a second zone of said second frame corresponding to said second sub-field of view (sFOV2).

According to a further non-limiting aspect, the method comprises electronically distinguishing, by means of said data processing unit (5), a first zone of said second frame corresponding to said first sub-field of view (sFOV1) and a second zone of said second frame corresponding to said second sub-field of view (sFOV2).

According to a further non-limiting aspect, said data processing unit (5) is configured for performing, for said second sub-field of view (sFOV2), said graphical processing on the second zone of said second frame, obtaining a second auxiliary subframe.

According to a further non-limiting aspect, the method comprises performing, by means of said data processing unit (5), for said second sub-field of view (sFOV2), said graphical processing on the second zone of said second frame, obtaining a second auxiliary subframe.

According to a further non-limiting aspect, said data processing unit (5) is configured for composing a second secondary image having said first zone of said second frame and said second auxiliary subframe.

According to a further non-limiting aspect, the method comprises composing, by means of said data processing unit (5), a second secondary image having said first zone of said second frame and said second auxiliary subframe.

According to a further non-limiting aspect, said data processing unit (5) is configured for transmitting said second secondary image to a monitor (6) and/or is configured for activating at least one between a sound and/or light emitter selectively according to said image data (I).

According to a further non-limiting aspect, the method comprises transmitting said second secondary image from said data processing unit (5) to said monitor (6) and/or comprises activating, by means of said data processing unit (5) and selectively according to said image data (I), at least one between a sound and/or light emitter.

According to a further non-limiting aspect, said data processing unit (5) is configured for performing said image identification algorithm on said first zone of said second frame and/or said second zone of said second frame.

According to a further non-limiting aspect, said method comprises performing, by means of said data processing unit (5), said image identification algorithm on said first zone of said second frame and/or said second zone of said second frame.

### Figures

The following detailed description shows some preferred embodiments of the object of the present disclosure. The detailed description refers to the annexed figures, a brief description of which is provided below.
Figure 1 shows a schematic view of an electronic device for capturing images and/or videos.
Figure 2 shows a schematic view of an electronic device for capturing images and/or videos comprising an optical radiation diverter element.
Figure 3 shows a schematic view of a device similar to the one of figure 2, comprising a first and a second optical radiation diverter element.
Figure 4 shows a schematic view of an images processing process performed through the electronic device object of the present disclosure.
Figures from 5 to 9, and from 5a to 9a show examples of image processings performed by a data processing unit of the electronic device object of the present disclosure.

### Detailed description

With the reference number 1 is indicated as a whole an electronic device 1 for capturing images and/or videos.

The electronic device 1 object of the present disclosure can be destined to capture images upon receipt of an images capturing command which arrives at determined time instants (device for capturing images) or can be destined to capture a video, therefore a sequence of images at predetermined frequency, without the need to have a determined command for each image.

The predetermined frequency can be a predetermined fixed frequency or a predetermined variable frequency.

The electronic device 1 object of the present disclosure is preferably destined to be installed on vehicles, for example - but in a non-limiting extent - inside vehicles. Such vehicles are preferably road vehicles.

The electronic device 1 object of the present disclosure comprises a body 2; the body 2 realized preferably in plastic material and/or in metallic material. If the body 2 is realized in plastic material, it can for example be realized by means of a production process by molding, for example injection molding or overmolding. Alternatively, or in combination the body 2 can be realized in resin, and/or at least partially in metal.

In use, a method for acquiring images and/or videos which shall also be considered object of the present disclosure, provides for positioning the body 2 in correspondence of a predefined position of a vehicle. A vehicle can be a land vehicle, for example, a bicycle, or anyway a vehicle without an engine, a car, an ATV, a motorcycle, a commercial vehicle, an earth-moving machine, or a naval or air vehicle.

The electronic device 1 comprises at least an optical sensor 3. The optical sensor 3 is a sensor sensitive to an optical radiation. The predefined position can be a position inside or outside the vehicle; the predefined position is such that the optical sensor 3 can acquire images of a portion surrounding the vehicle.

For example, the optical sensor 3 can be arranged in substantial correspondence of the front plate of the vehicle.

For the purposes of the present disclosure the optical radiation R comprises at least one between a radiation belonging to the visible spectrum, and therefore approximately comprised in the range [310 ÷ 1100] nm, or anyway in the range [350 ÷ 750] nm, an ultraviolet radiation (wavelength less than 350nm) or an infrared radiation (wavelength higher than 1100nm).

An embodiment of the electronic device 1 object of the present disclosure can be provided with an optical sensor 3 whose sensitivity is optimized for the visible spectrum. Further embodiments of the electronic device 1 object of the present disclosure can be provided with an optical sensor 3 whose sensitivity is optimized for the infrared spectrum and/or for the ultraviolet spectrum.

The optical sensor 3 is arranged on the body 2; in an embodiment such optical sensor 3 is arranged in a fixed position on the body 2; in a further embodiment the optical sensor 3 can be movably installed on the body 2, for example being rotatably and/or translatably installed on the body 2.

In this latter case, the rotation and/or translation of the optical sensor 3 with respect to the body 2 can be performed manually or can be performed electrically by means of an appropriate actuator, for example and not limited to electrical and/or hydraulic and/or with variation of physical characteristic. In a non-limiting embodiment, an actuator with variation of physical characteristic can be a shape memory actuator, for example in the form of a sheet.

The optical sensor 3 is a matrix-type sensor, provided with a plurality of photoreceptors sensitive to a particular wavelength, in particular red, green and blue. Such photoreceptors result in a plurality of pixels arranged on multiple rows and multiple columns orthogonal to the rows. Preferably each pixel is a RGB pixel.

From an electronic point of view the optical sensor 3 can use CCD technology or CMOS technology, anyway such type of technology shall not be intended as limiting since organic type sensors could be used, for example. The optical sensor 3 can integrate a circuitry capable of allowing a variation of a frame rate, and/or capable of allowing an automatic control of the exposure (AEC) and/or of the white (AWB), and/or capable of allowing an automatic band filter (ABF), and/or capable of compensating a 50/60Hz lighting flickering, and/or allowing an automatic black level control (ABLC). The optical sensor 3 can operate in global shutter mode (that is with simultaneous and integral activation/deactivation of all the photoreceptors) or in rolling shutter mode (that is by activating one after another the rows of photoreceivers which compose it). Non-limiting examples of optical sensors 3 usable for the automotive application are produced by OmniVision Technologies.

The optical sensor 3 has a field of view indicated in figure with the reference FOV. The field of view FOV is preferably characterized by a fixed extension. Anyway, some embodiments of the optical sensor 3 of the electronic device 1 object of the present disclosure can be provided with a field of view FOV whose extension is variable.

The field of view defines a predetermined (fixed or variable) solid angle. In figures such angle is schematically represented as planar angle.

The field of view FOV can advantageously comprise a first sub-field of view sFOV1 and a second sub-field of view sFOV2.

As will be better described in the present document, the first sub-field of view sFOV1 and the second sub-field of view sFOV2 are defined according to the positioning of the optical radiation diverter element.

In particular, in fact, the electronic device 1 object of the present disclosure comprises at least a first optical radiation diverter element 4, that is arranged in at least one first predefined positional relation with respect to the optical sensor 3.

The first optical radiation diverter element 4 is arranged inside the field of view FOV of the optical sensor 3. Preferably, but in a non-limiting extent, the first optical radiation diverter element 4 is arranged along a direction sensibly inclined, optionally orthogonal, with respect to the axis of the optical sensor 3 (axis X). More in detail, the first optical radiation diverter element 4 can show at least one wall lying on a plane whose edge is significantly inclined, and optionally orthogonal, with the axis of the optical sensor 3.

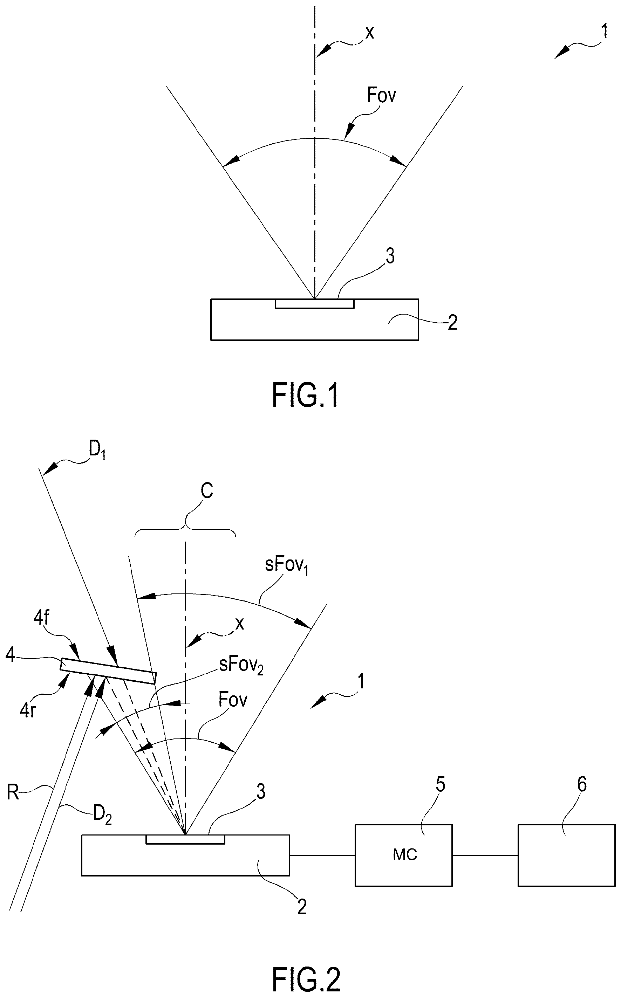

As it appears clear from figure 2, the presence of the at least a first optical radiation diverter element 4 advantageously allows to extend the field of view FOV of the optical sensor 3 toward directions of acquisition of optical radiation that, without the aid of said at least a first optical radiation diverter element 4, would not be accessible.

The first optical radiation diverter element 4, as schematically represented in figure 2, comprises a first surface 4f and a second surface 4r. The first surface 4f is directed toward a directrix D1 that is aligning to the direction of acquisition of images of the optical sensor 3.

The second surface 4r is opposed with respect to the first surface 4f. The opposition shall not be intended in a limiting way: in fact, although the first optical radiation diverter element 4 is schematically represented in figure 2 as an element with a substantially rectangular shape, further shapes could be conveniently used. The second surface 4r can be inclined with respect to the first surface 4f.

In a preferred embodiment, at least one between the first surface 4f and the second surface 4r, in particular both the first surface 4f and the second surface 4r are planar. The planarity of the surfaces allows an optimal image reflection, and is therefore useful to avoid optical distortions.

Further embodiments may provide non-planar surfaces; in such case the data processing unit better described below may be conveniently used to perform, for example via software, a compensation of the image captured in the second sub-field of view sFOV2 due to the non-planarity.

The Applicant notes that the non-planarity of at least one between the first surface 4f and the second surface 4r can be used to widen, or on the contrary, to reduce the width of the second sub-field of view sFOV2.

Preferably, the first surface 4f and the second surface 4r lie on parallel planes.

The positioning of the first optical radiation diverter element 4 is such to define at least one between the extension, in particular the angular extension, of the second sub-field of view sFOV2, and a relation of the second sub-field of view sFOV2 with respect to the first sub-field of view sFOV1.

As schematically represented in figure 2, the first sub-field of view sFOV1 and the second sub-field of view sFOV2 are juxtaposed; for the sake of simplicity, can be considered that each one between the first sub-field of view sFOV1 and the second sub-field of view sFOV2 defines an angle having a side in common with the side of the other sub-field of view. Anyway, if the thickness of the first optical radiation diverter element 4 is relevant, such situation may not take place in practice.

Figure 2 shows a particular configuration wherein the first optical radiation diverter element 4 extends partially outside the field of view FOV of the optical sensor 3. Clearly this solution is not to be intended as limiting.

On the basis of the above simplification, the sum of the widths of the first sub-field of view sFOV1 and of the second sub-field of view sFOV2 realizes the width of the field of view FOV of the optical sensor 3.

The at least a first optical radiation diverter element 4 is configured for deviating an optical radiation R incident thereon in said second sub-field of view sFOV2. To graphically represent this technical characteristic, figure 2 shows an optical radiation coming from a directrix D2, and that is incident on the second surface 4r of the first optical radiation diverter element 4 inside the area of the second sub-field of view sFOV2. Such optical radiation is reflected by the second surface 4r and is addressed toward the optical sensor 3.

It therefore appears clear that the second surface 4r is a reflective surface, and preferably is a perimeter or peripheral surface. Also the first surface 4f is preferably a perimeter or peripheral surface.

The first surface 4f can be an absorbent or reflecting surface, but does not allow the optical radiation incident thereon to traverse the body of the first optical radiation diverter element 4 toward the second surface.

The second surface 4r does not allow the optical radiation incident thereon to traverse the body of the first optical radiation diverter element 4 toward the first surface.

In a preferred embodiment, the first optical radiation diverter element 4 is non-prismatic type, and in particular is substantially fully reflecting.

The first sub-field of view sFOV1 is free from elements substantially deviating said optical radiation R.

Therefore, the first optical radiation diverter element 4 is configured for attenuating, preferably blocking, the optical radiations that, in the second sub-field of view sFOV2, along a first directrix D1 intersecting the first optical radiation diverter element 4 in correspondence of a first surface 4f thereof and joined with said optical sensor 3 in the second sub-field of view sFOV2, come from a distance greater with respect to said predefined distance.

The first optical radiation diverter element 4 is configured for reflecting the optical radiations that, in the second sub-field of view sFOV2, come from along a second directrix D2 intersecting the first optical radiation diverter element 4 in correspondence of an its second surface 4r different, in particular inclined or opposed, with respect to said first surface 4f, optionally wherein the second directrix D2 does not intersect the optical sensor 3.

The first optical radiation diverter element 4, arranged frontally with respect to the optical sensor 3, is configured for reflecting optical radiations coming from a lateral and/or rear direction with respect to the optical sensor 3. The second directrix D2 comes from a rear direction of the optical sensor 3.

The above-described technical characteristics allow the optical sensor 3 to capture images of objects coming from directions not included inside its field of view FOV, effectively partially extending the field of view FOV toward directions otherwise inaccessible, if not with extension lenses.

Part of the field of view FOV of the optical sensor 3 is unaltered by the presence of the first optical radiation diverter element 4, and therefore such sensor can favorably capture the images coming from a front direction without alteration.

In a typical field of application, the electronic device 1 herein described is conceived to provide a user, driver, with a side view (left / right) when this is limited or even prohibited. A typical example wherein this situation takes place is in proximity of a crossing, or of a stop sign.

In a further typical field of use, the electronic device 1 object of the present disclosure is arranged in at least one predefined position of a predefined environment. "At least one predefined position" implies that the device 1 can be made movable by rotation, translation, or roto-translation, with respect to a starting position.

The at least one predefined position is a position for example in correspondence of, or within, a building. In this case, the device 1 object of the present disclosure is usable for viewing zones behind a wall corner, thanks to the aid of the at least a first optical radiation diverter element 4.

In this case, on the sides of the carriageway where one wishes to enter, there can be vehicles parked and at the same time may not be present the parabolic road mirror that in some cases is installed in correspondence of the road surface to allow checking if vehicles are approaching from the left or right direction.

A typical installation of the electronic device 1 herein described is in correspondence of a front license plate holder.

The electronic device 1 object of the present disclosure not only allows to provide the user with a lateral view (left / right, in figure 2 left lateral/rear, by means of the second sub-field of view sFOV2), but also allows, at the same time, can allow for example to frame the front portion of the vehicle or of the area in front of the vehicle, through the zone identified by the first sub-field of view sFOV1.

In the embodiment of figure 2, the first optical radiation diverter element 4 is arranged at a predefined, and fixed, distance with respect to said optical sensor 3. This technical characteristic shall not be considered limiting; in fact, the first optical radiation diverter element 4 can be configured for performing a rotation and/or translation motion with respect to the sensor 3.

In this latter case the width of the second sub-field of view sFOV2 and of the first sub-field of view sFOV1, as well as their positional relation can be variated. An actuator arranged in correspondence of the first optical radiation diverter element 4, or alternatively arranged in correspondence of the optical sensor 3, can have a movement of rotation and/or translation performed that determines at least one between a variation of an angular width of the second sub-field of view sFOV2 and/or a variation of a positional relation between the second sub-field of view sFOV2 and the first sub-field of view sFOV1 and/or a variation of an angular width of the first sub-field of view sFOV1.

The above-described actuator can be any type of actuator, for example electric, hydraulic and/or with variation of physical characteristic, for example with shape varaition. A specific and non-limiting embodiment of the actuator is a sheet of shape memory metal alloy.

Figure 2 shows that the field of view FOV of the optical sensor 3 comprises a central portion C, and comprises also a central axis X.

The first sub-field of view sFOV1 and the second sub-field of view sFOV2 are joined in correspondence of the central portion C and can be joined in substantial correspondence of the central axis X.

In the configuration represented in figure 2, the first sub-field of view sFOV1 comprises the central portion C and comprises the central axis X of the field of view FOV of the optical sensor 3.

The second sub-field of view sFOV2 can have a significantly larger or significantly smaller size, with respect to the size of the first sub-field of view sFOV1. If the second sub-field of view sFOV2 has a significantly larger size with respect to the size of the first sub-field of view sFOV1, it may take place that said central portion C is included within said second sub-field of view sFOV2.

Although this characteristic should not be considered as limiting, preferably the first sub-field of view sFOV1 and the second sub-field of view sFOV2 are comprised in a dimensional ratio between 1:4 and 4:1 and/or are symmetrical with respect to the central portion C, optionally with respect to the central axis X.

The technical solution described in the present document significantly reduces the number and complexity of the optical devices that are necessary to obtain a separation of the field of view and does not require high FOV lenses, which determine significant image distortions.

In this specific regard, it should be noted that the use of high FOV lenses involves the need for high resolutions for the optical sensors, and this complicates the electronic processing performed by the data processing unit, in order to compensate the loss of resolution of the peripheral portions of the image captured by the optical sensor, thereby losing central portions of the image that are not necessary for the purpose.

In figure 2, the optical sensor 3 is operatively connected with the data processing unit 5. The data processing unit 5 may comprise a general-purpose type processor, a dedicated processor or integrated circuit (ASIC), an FPGA, and/or a programmable logic controller. The data processing unit 5 can be a data processing unit of a Raspberry, and the connection that exists between the optical sensor 3 and the data processing unit 5 can be for example performed with a flat cable.

The data processing unit 5 can be configured for performing a program that comprises software code portions written in any programming language, for example in Python.

The data processing unit 5 may comprise, or be operatively connected with, a memory.

The operative connection between the optical sensor 3 and the data processing unit 5, and/or the operative connection between the data processing unit 5 and the memory, can be of electric and/or optical nature, and can be at least partially wired or at least partially taking place on a wireless channel.

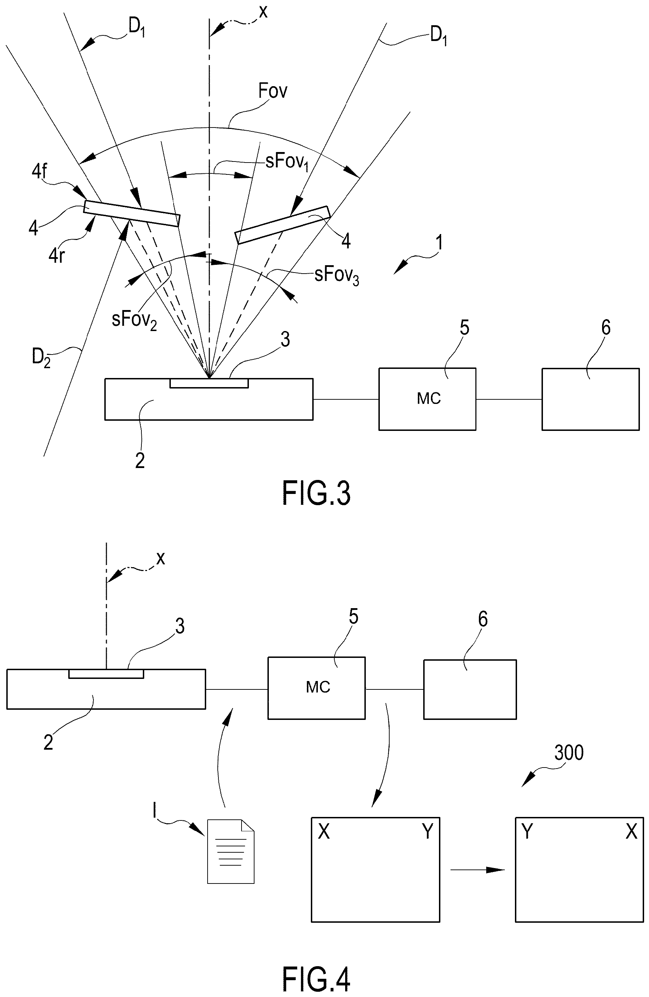

Figure 3 shows a further embodiment of the electronic device object of the present disclosure. In this case the electronic device 1 comprises a first optical radiation diverter element 4 and a second optical radiation diverter element 4.

The characteristics of the first optical radiation diverter element and of the second optical radiation diverter element have already been described, and for this reason are not repeated below. it is to be noted that also the second optical radiation diverter element 4 is non-prismatic type, and in particular is substantially fully reflecting.

In this case the field of view FOV of the optical sensor 3 is divided in a first sub-field of view sFOV1, in a second sub-field of view sFOV2, and a third sub-field of view sFOV3.

Similar to the previously described embodiment, the first sub-field of view sFOV1 is free from elements substantially deviating the optical radiation.

In the embodiment of figure 3, the first optical radiation diverter element 4, arranged in a first predefined position with respect to the optical sensor 3 within said field of view FOV, defines at least one between an extension of the second sub-field of view sFOV2 and a positional relation of said second sub-field of view sFOV2 with respect to the first sub-field of view sFOV1 and/or with respect to the third sub-field of view sFOV3.

The second optical radiation diverter element 4, arranged too in a first predefined position with respect to the optical sensor 3 in the field of view FOV, defines at least one between an extension of the third sub-field of view sFOV3 and a positional relation of the third sub-field of view sFOV3 with respect to the first sub-field of view sFOV1 and/or with respect to the second sub-field of view sFOV2.

In the embodiment of figure 3, the first optical radiation diverter element 4 is configured for deviating the optical radiation incident in the second sub-field of view sFOV2, and the second optical radiation diverter element 4 is configured for deviating the optical radiation incident in the third sub-field of view sFOV3.

Similar to what has been described for the preceding embodiment, also for the present embodiment at least one between the first optical radiation diverter element 4 and the second optical radiation diverter element 4 can be configured for performing a rotation and/or translation motion with respect to the optical sensor 3. It has also been conceived the alternative and opposed embodiment wherein the first and the second optical radiation diverter element 4 are fixed and is the optical sensor 3 to be actuated, by means of a rotation and/or translation actuator, in rotation and/or in translation with respect to the first optical radiation diverter element 4 and/or with respect to said second optical radiation diverter element 4.

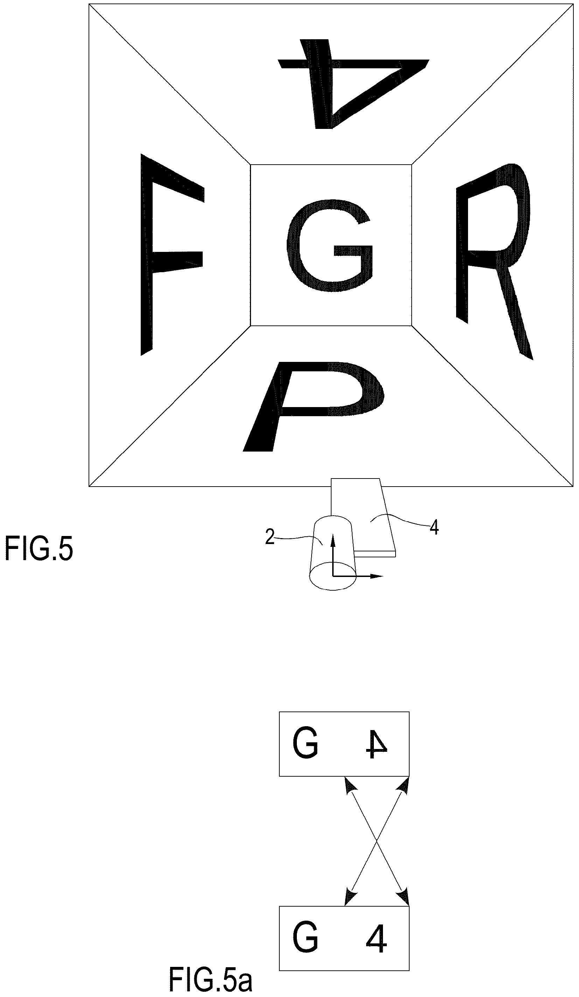

Figure 5 shows a schematic representation of an image processing process performed through the device object of the present disclosure.

In particular, the image data I that are provided in output from the optical sensor 3 are provided in input to the data processing unit 5.

The data processing unit 5 is first of all configured for loading the image data I transmitted by the optical sensor 3, and such processing is performed preferably in substantially real time. The electronic processing performed in substantially real time is important for automotive applications, as it allows to operate the device object of the present disclosure during the normal driving of a vehicle without delays incompatible with the ready execution of corrective measures if through the optical sensor 3 the pilot becomes aware of determined dangerous situations.

The data processing unit 5 is configured for electronically distinguishing, on the image data I, at least:
- a first zone corresponding to the first sub-field of view sFOV1 and a second zone corresponding to the second sub-field of view sFOV2.

The data processing unit 5 is also configured for graphically processing at least one part of the image data I. The graphical processing takes place preferably in substantially real time.

The graphical processing comprises preferably a flipping, performed with the purpose of making the image compatible with the observation by the pilot, and compensating the effects of flipping induced by the deviator device of optical radiation 4 (one, or if present in plurality, by the optical radiation diverter devices).

The flipping can be a flipping along the horizontal axis or along the vertical axis (reference 300, figure 4).

In figure 4, the block identified by the numerical reference 6 identifies a monitor operatively connected to the data processing unit 5. The connection may be electric and/or optical and take place at least partially on a wireless channel.

The monitor 6 is destined to produce the images processed by the data processing unit 5 in the mode described herein; conveniently, the monitor 6 is arranged inside the cockpit of the vehicle in a position easily visible to the user.

In a non-limiting embodiment, the monitor 6 is an LCD-type monitor. The monitor 6 can be flanked or replaced by a sound and/or light emitter, for the emission of an acoustic and/or visual warning signal. The monitor 6 may alternatively be a LED-, plasma-, OLED-, e-ink-, type monitor etc.

Preferably, but in a non-limiting extent, the data processing unit 5 is configured for electronically identifying in an automatic way the presence of at least an object, and the recognition is performed in at least one between the first sub-field of view sFOV1 and the second sub-field of view SFOV2. Preferably, the recognition takes place simultaneously on the first sub-field of view sFOV1 and the second sub-field of view SFOV2.

The recognition is preferably performed in real time, again with the purpose of making the device 100 object of the present disclosure compatible with automotive applications while driving. The real time recognition shall not, in any case, be considered limiting or necessary.

In a non-limiting way, the recognition is a recognition of an approaching object, to the optical sensor 3. An approaching object, as time passes, becomes larger and larger for the optical sensor 3 (it occupies a larger area of the image area captured by the optical sensor 3).

The approaching object can be present in the first sub-field of view sFOV1 and/or in the second sub-field of view sFOV2 and/or in the third sub-field of view sFOV3.

The data processing unit 5, for automatically identifying the presence of at least an object, and in particular for automatically identifying the presence of the approaching object, exploits in particular a neural network and even more preferably exploits a convolutional neural network type (CNN).

The image identification algorithm performed by the data processing unit 5, depending on the case, can be a single-stage type or a two-stage algorithm. Non-limiting examples of the above-mentioned algorithms include Yolo, Haar, Cascade.

Preferably, but in a non-limiting extent, the image data I comprise a plurality of frames F.

The frames F are transmitted or otherwise received and/or processed by the data processing unit 5 at a constant frequency; the frequency can be for example 24fps, or 30fps or 50 fps.

In each frame F is identifiable both the first zone and the second zone.

It appears therefore clear that each frame F is relative to a respective time instant that is different from the time instant relative to a further frame F. The image data I can therefore be considered streaming data.

In use the data processing unit 5:
- first of all electronically reads a first frame of said plurality of frames F,
- electronically distinguishes, on said first frame, a first zone of said first frame corresponding to said first sub-field of view sFOV1 and a second zone of said first frame corresponding to said second sub-field of view sFOV2,
- performs, for said second sub-field of view sFOV2, the graphical processing on the second zone of said first frame, obtaining a first auxiliary subframe,
- composes a first secondary image having said first zone of said first frame and said first auxiliary subframe,
- preferably, transmits said first secondary image to the monitor 6.

In particular, if there are two optical radiation diverter elements 4, the data processing unit electronically distinguishes, on said first frame, also a third zone of the first frame that corresponds to the third sub-field of view sFOV3.

If so configured, in use the data processing unit 5 performs the image identification algorithm on the first zone of the first frame and/or on the second zone of the first frame. If there are two optical radiation diverter elements 4, the data processing unit 5 performs the image identification algorithm also on the third zone of the first frame.

In a subsequent time instant, the data processing unit 5 automatically reads also a second frame of the above-mentioned plurality of frames F.

The data processing unit 5 then:
- distinguishes, on said second frame, a first zone of said second frame corresponding to said first sub-field of view sFOV1 and a second zone of said second frame corresponding to said second sub-field of view sFOV2,
- performs, for said second sub-field of view sFOV2, said graphical processing on the second zone of said second frame, obtaining a second auxiliary subframe,
- composes a second secondary image having said first zone of said second frame and said second auxiliary subframe.

It is intended that if there are two deviator elements of optical radiation 4, there are operations of distinction of the third zone of the second frame, and the graphical processing may also take place on the third sub-field of view sFOV3, for at least part of the frames F received.

Also, the second secondary image is therefore transmitted to the monitor 6.

If thus configured, the data processing unit 5 performs also the recognition algorithm also on the second frame F.

Figures from 5 to 9 show in a schematic way combinations of spatial arrangement between the optical sensor 3 and an optical radiation diverter element 4, in relation to objects located in determined spatial relations with respect to them.

In particular, in figures from 5 to 9 are identifiable objects F located on the left of the optical sensor 3, objects G located in front of the optical sensor 3 (substantially aligned to the central axis X), objects R located on the right of the optical sensor 3, objects 4 located above the optical sensor 3, objects P located below the optical sensor 3.

Figures from 5a to 9a schematically represent image flipping operations, performed on one of the zones of the frame F captured by the optical sensor 3.

In particular figure 5 shows a spatial arrangement for the optical sensor 3 and an optical radiation diverter element 4, wherein such optical radiation diverter element 4 has its first and second surface 4f, 4r respectively oriented downward and upward.

In this way, the optical radiation diverter element 4 allows the optical sensor 3 to capture the image relative to the object 4 arranged above the optical sensor 3.

The image acquired by the optical sensor 3 is represented in the top portion of figure 5a. The object G is represented without flipping, since it is located in the first sub-field of view sFOV1. The object 4 is instead located in the second sub-field of view sFOV2.

Consequently, the object 4 for the optical sensor 3 appears mirror-inverted along an axis substantially vertical.

The image resulting from the flipping appears in the lower portion of figure 5a.

In this case the data processing unit 5 performs an electronic operation of flipping of the object 4 along an axis substantially vertical, for straightening the vision of the object itself. Such flipping can be considered a rotation of the object 4 by 180° on an axis substantially vertical.

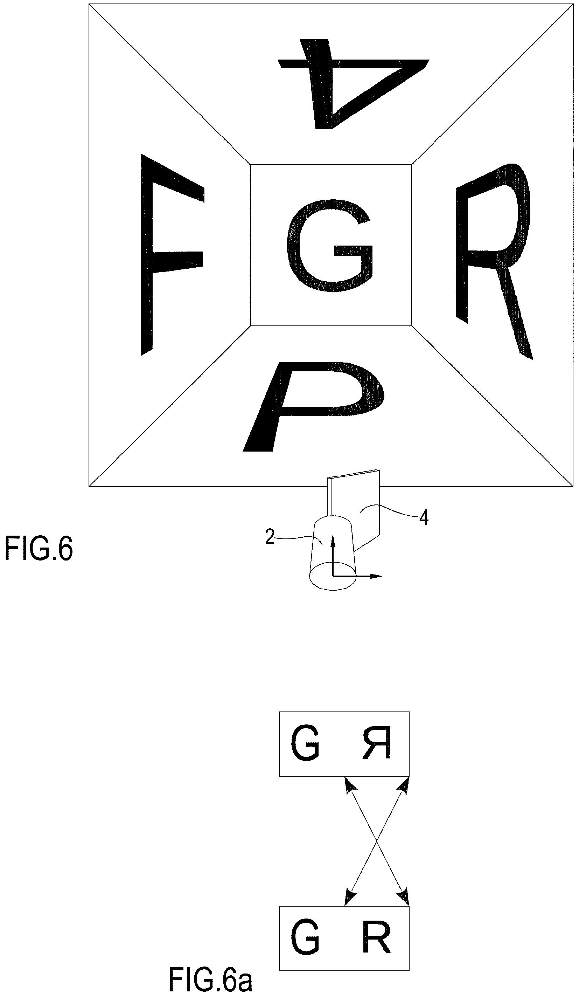

Figure 6 shows a spatial arrangement for the optical sensor 3 and an optical radiation diverter element 4, wherein such optical radiation diverter element 4 has its first and second surface 4f, 4r respectively oriented on a substantially vertical plane. The situation of figure 6 is completely similar to the one of figure 2.

The arrangement of the optical radiation diverter element 4, is such as to allow the optical sensor 3 to capture the image relative to the object R arranged on the right of the optical sensor 3.

Again, the image acquired by the optical sensor 3 is represented in the top portion of figure 6a. The object G is represented without flipping, since is located in the first sub-field of view sFOV1. The object R is instead located in the second sub-field of view sFOV2.

Consequently, the object R for the optical sensor 3 appears mirror-reversed along an axis substantially vertical.

The image resulting from the flipping appears in the lower portion of figure 6a.

In this case the data processing unit 5 performs an electronic operation of flipping of the object R along an axis substantially vertical, for straightening the vision of the object itself. Such flipping can be considered a rotation of the object R by 180° on an axis substantially vertical.

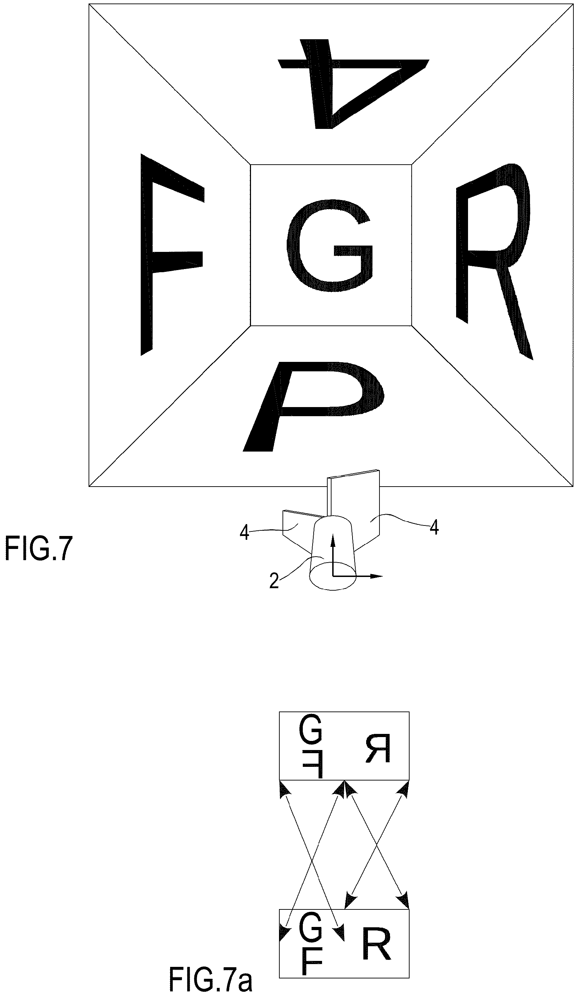

Figure 7 shows a spatial arrangement for the optical sensor 3 and a first optical radiation diverter element 4 and a second optical radiation diverter element 4.

The first optical radiation diverter element 4 and the second optical radiation diverter element 4 show respective first and second surface 4f, 4fr respectively oriented on a substantially vertical plane. The situation of figure 7 is similar to the one of figure 3.

The second optical radiation diverter element 4 has a vertical extension greater with respect to the first optical radiation diverter element 4, and it results that the first sub-field of view sFOV1 is strongly limited on the right of the central axis X.

The arrangement of the first and second optical radiation diverter element 4 is such as to allow the optical sensor 3 to capture the image relative to the objects F and R, respectively located on the left and on the right of the optical sensor 3.

The image acquired by the optical sensor 3 is represented in the top portion of figure 7a. The object G is represented without flipping, since is located in the first sub-field of view sFOV1. Objects F and R are arranged in the second and third sub-field of view sFOV2 and sFOV3, and result therefore flipped.

In particular, both the object F and the object R result flipped along an axis substantially vertical.

The image resulting from the flipping appears in the lower portion of figure 7a.

In this case the data processing unit 5 performs an electronic operation of flipping of the objects F and R along an axis substantially vertical, for straightening the vision of the object itself. Such flipping can be considered a rotation of the object F and of the object R by 180° on an axis substantially vertical.

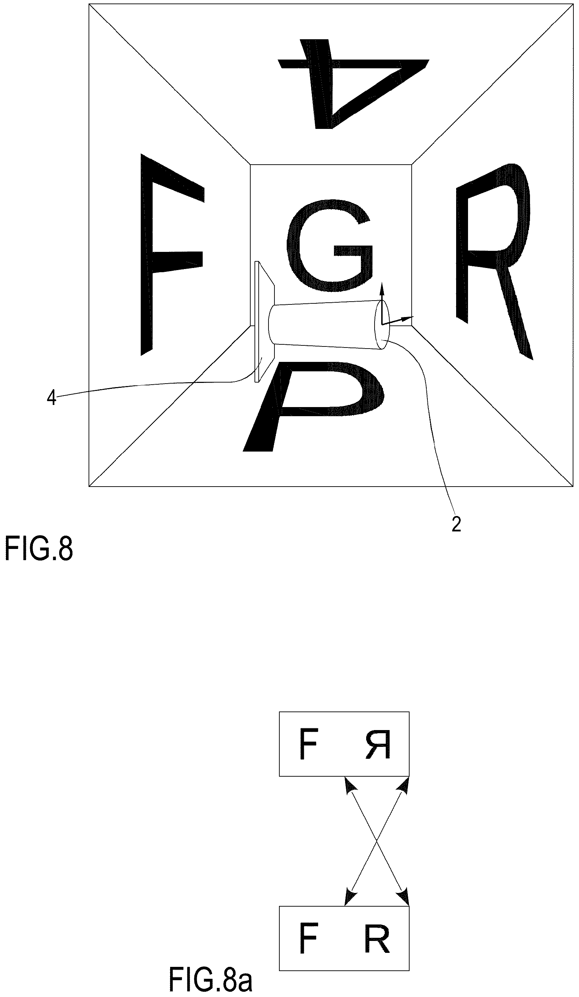

Figure 8 shows a spatial arrangement for the optical sensor 3 and a first optical radiation diverter element 4, wherein such optical radiation diverter element 4 has its first and second surface 4f, 4r respectively oriented on a vertical plane.

The optical axis (central axis X) of the optical sensor 3 is such that it is oriented toward the object F, but with respect to the plane on which lays the object F such axis is not orthogonal.

The arrangement of the optical radiation diverter element 4 is such as to allow the optical sensor 3 to capture the image relative to the object R arranged substantially behind the optical sensor 3.

Again, the image acquired by the optical sensor 3 is represented in the top portion of figure 8a. The object F is represented without flipping, since is located in the first sub-field of view sFOV1; the object R is instead located in the second sub-field of view sFOV2.

The object R for the optical sensor 3 appears flipped in a mirror way along an axis substantially vertical.

The image resulting from the flipping appears in the lower portion of figure 8a.

In this case the data processing unit 5 performs an electronic operation of flipping of the object R along the substantially vertical axis, for straightening the vision of the object itself. Such flipping can be considered a rotation of the object R by 180° on an axis substantially vertical.

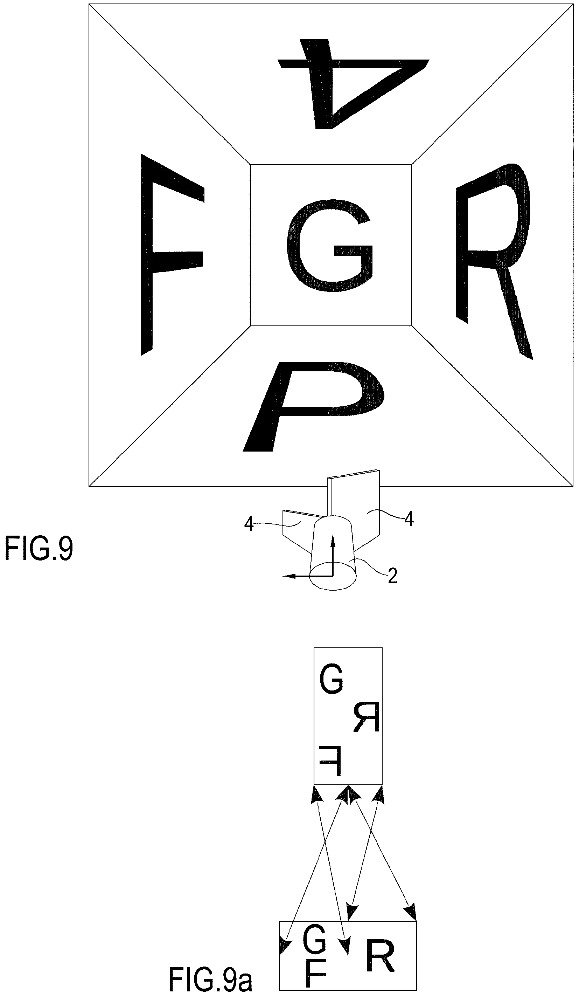

Figure 9 shows a spatial arrangement for the optical sensor 3 and a first optical radiation diverter element 4 and a second optical radiation diverter element 4.

The first optical radiation diverter element 4 and the second optical radiation diverter element 4 show respective first and second surfaces 4f, 4fr respectively oriented on a substantially vertical plane. The situation of figure 9 is similar to the one of figure 3.

In this case, anyway, the optical sensor 3 is rotated by 90° on its central axis X.

The second optical radiation diverter element 4 has a vertical extension greater with respect to the first optical radiation diverter element 4, and it results that the first sub-field of view sFOV1 is strongly limited on the right of the central axis X.

The arrangement of the first and second optical radiation diverter element 4 is such as to allow the optical sensor 3 to capture the image relative to the objects F and R, respectively located on the left and on the right of the optical sensor 3.

The image acquired by the optical sensor 3 is represented in the top portion of figure 9a. The object G is represented without flipping, since is located in the first sub-field of view sFOV1. The objects F and R are arranged in the second and third sub-field of view sFOV2 and sFOV3, and result therefore flipped.

The spatial arrangement of the objects F and R is altered by the rotation of the optical sensor 3 and by the spatial arrangement of the first and second optical radiation diverter element 4.

Therefore, in this case the data processing unit 5 not only performs a flipping along a substantially vertical axis of the portions of frame F relative to the objects F and R, but also performs a spatial recomposition procedure wherein the relative spatial arrangement between the first, the second and the third zone of the frame is altered.

A further embodiment, more complex, of the device 1 object of the present disclosure provides for the presence of an optical radiation emitter, arranged preferably in substantial proximity of the, or in correspondence of the, optical sensor 3.

The optical radiation emitter may emit a radiation belonging to the visible spectrum, and therefore approximately comprised in the range [310 ÷ 1100] nm, or anyway in the range [350 ÷ 750] nm, and/or an ultraviolet radiation (wavelength less than 350nm), and/or an infrared radiation (wavelength higher than 1100nm).

In an embodiment non-limiting, the optical radiation emitter is wavelength-tunable.

Various types of optical radiation emitter can be used; for example, a device optical radiation emitter can be a LED. A further example of optical radiation emitter device can be characterized by a coherent emission, and be in particular a laser. The optical radiation emitter can be configured for emitting a continuous or modulated, in particular pulsed optical radiation.

Preferably, but in a non-limiting extent, the optical radiation emitter can be configured for having a preferential radiation direction directed toward the at least a first optical radiation diverter element 4, and - if present - toward the at least a second optical radiation diverter element 4.

For simplicity purposes, it may be considered that the position assumed by the optical radiation emitter is identical to the one assumed by the optical sensor 3: therefore, the relative arrangement between the first and/or the second optical radiation diverter element and the optical sensor 3, is the same that exists between the first and/or the second optical radiation diverter element and the optical radiation emitter.

The assembly formed by the optical sensor 3 and by the optical radiation emitter may realize a time-of-flight camera (TOF camera).

A time-of-flight camera is configured for determining the distance of an object measuring the time-of-flight (TOF) that passes between the emission of an optical radiation impulse and the receipt of this latter by the optical sensor 3.

The use of the device 1 in accordance to the herewith described embodiment, that therefore is capable of implementing a LIDAR technology, advantageously allows to estimate the position of objects detected with optical radiations transmitted and then received through a deviation of optical path provided by the at least one first optical radiation diverter element, and/or where present, by the second optical radiation diverter element. The data processing unit 5 in this case can be configured for determining a sending of a warning signal if there is the detection of an object arranged at a distance lower with respect to a predetermined threshold, or if such object approaches the device 1 with a speed greater with respect to the threshold speed.

The invention is not limited to the embodiments of the figures; for this reason, the numbers and reference signs in the claims are provided to the sole scope of increasing the intelligibility thereof, and do not have limiting character.

It is finally clear that to the object of the present disclosure can be applied additions, modifications or variants, obvious for a skilled technician, without for this departing from the scope of protection provided by the annexed claims.

## Claims

1. Electronic device (1) for capturing images and/or videos, comprising:
- a body (2);
- at least one optical sensor (3) arranged on said body (2) and having a field of view (FOV) comprising at least one first sub-field of view (sFOV1) and one second sub-field of view (sFOV2);
- at least one first optical radiation diverter element (4), arranged in at least one first predefined position with respect to said optical sensor (3) within said field of view (FOV), in such a way as to define at least one between an extension of said second sub-field of view (sFOV2) and a positional relation of said second sub-field of view (sFOV2) with respect to said first sub-field of view (sFOV1);
wherein said at least one first optical radiation diverter element (4) is configured for diverting an optical radiation (R) incident thereon in said second sub-field of view (sFOV2) and wherein said first sub-field of view (sFOV1) is free from elements substantially diverting said optical radiation (R).

2. Device according to claim 1, wherein said at least one first optical radiation diverter element (4) is located at a predefined distance with respect to said optical sensor (3) and is configured for attenuating, preferably blocking, the optical radiations that, in said second sub-field of view (sFOV2), preferably along a first directrix (D1) intersecting said at least one first optical radiation diverter element (4) in correspondence of a first surface (4f) thereof and joined with said optical sensor (3) in said second sub-field of view (sFOV2), come from a greater distance with respect to said predefined distance,
preferably wherein said at least one first optical radiation diverter element (4) is configured for reflecting the optical radiations that, in said second sub-field of view (sFOV2), come along a second directrix (D2) intersecting said at least one first optical radiation diverter element (4) in correspondence of a second surface (4r) thereof different, in particular inclined or opposed, with respect to said first surface (4f), optionally wherein said second directrix (D2) does not intersect said optical sensor (3).

3. Device according to one or more of the preceding claims, configured for allowing a relative rotation and/or relative translation motion between said at least one first optical radiation diverter element (4) and said optical sensor (3), preferably said at least one first optical radiation diverter element (4) is configured for making a rotation and/or translation motion with respect to said optical sensor (3), or wherein said at least one first optical radiation diverter element (4) is arranged at a positional relation fixed with respect to said optical sensor (3),
wherein said rotation and/or translation motion determines at least one between a variation of an angular amplitude of said second sub-field of view (sFOV2) and/or a variation of a positional relation between said second sub-field of view (sFOV2) and said first sub-field of view (sFOV1) and/or a variation of an angular amplitude of said first sub-field of view (sFOV1).

4. Device according to one or more of the preceding claims, wherein said field of view (FOV) comprises a central portion (C), optionally a central axis (X),
and wherein said first sub-field of view (sFOV1) and said second sub-field of view (sFOV2) are joined in correspondence of said central portion (C), optionally of said central axis (X),
and/or wherein said first sub-field of view (sFOV1) comprises said central portion (C), optionally said central axis (X),
and/or wherein said first sub-field of view (sFOV1) and said second sub-field of view (sFOV2) are comprised in a dimensional ratio between 1:4 and 4:1 and/or are symmetrical with respect to said central portion (C), optionally with respect to said central axis (X).

5. Device according to one or more of the preceding claims, wherein said at least one first optical radiation diverter element (4) is frontally arranged with respect to said optical sensor (3), and is configured for reflecting optical radiations coming from a lateral and/or rear direction with respect to said optical sensor (3),
optionally said second directrix (D2) coming from said lateral direction and/or from said rear direction.

6. Device according to one or more of the preceding claims, wherein said field of view (FOV) comprises a third sub-field of view (sFOV3), different with respect to said first sub-field of view (sFOV1) and to said second sub-field of view (sFOV2), and comprises a second optical radiation diverter element (4),
and wherein said second optical radiation diverter element (4) is arranged in at least one second predefined position with respect to said optical sensor (3) within said field of view (FOV), in such a way as to define at least one between an extension of said third sub-field of view (sFOV3) and a positional relation of said third sub-field of view (sFOV3) with respect to said first sub-field of view (sFOV1) and with respect to said second sub-field of view (sFOV2),
and wherein said second optical radiation diverter element (4) is configured for diverting an optical radiation incident thereon in said third sub-field of view (sFOV3).

7. Device according to one or more of the preceding claims, comprising an optical radiation emitter, configured for emitting an optical radiation (R) at least towards said first optical radiation diverter element (4), optionally towards at least one between said first optical radiation diverter element (4) and said second optical radiation diverter element (4), so that said optical radiation (R) can be received by said optical sensor (3) when reflected by at least one determined object,
preferably wherein an assembly formed by said optical radiation emitter and said optical sensor (3) realizes a time-of-flight camera.

8. System comprising an electronic device (1) according to one or more of the preceding claims, and a data processing unit (5) operatively connected to said optical sensor (3), preferably optically and/or electrically connected to said optical sensor (3), wherein said optical sensor (3) is configured for transmitting at least image data (I), the data processing unit (5) being configured for:
- loading the image data (I) transmitted by said optical sensor (3),
- distinguishing, on said image data (I), at least one first zone corresponding to said first sub-field of view (sFOV1) and a second zone corresponding to said second sub-field of view (sFOV2),
- performing a graphical processing of a part of said image data (I) corresponding to said second zone, preferably said graphical processing comprising at least one flipping;
said flipping comprising a flipping along a first axis, or horizontal axis, and/or a flipping along a second axis, or vertical axis.

9. System according to claim 8, wherein said data processing unit (5) is configured for automatically identifying the presence of at least one object in correspondence of at least one between said first sub-field of view (sFOV1) and said second sub-field of view (sFOV2), preferably for automatically identifying the presence of at least one object approaching to said optical sensor (3) within said first sub-field of view (sFOV1) and said second sub-field of view (sFOV2),
preferably wherein said data processing unit (5) is configured for automatically identifying the presence of said at least one object through an image identification algorithm, more preferably of neural network type and even more preferably of convolutional neural network type (CNN),
optionally wherein said image identification algorithm is a single-stage type algorithm or is a two-stage type algorithm.

10. System according to claim 8 or claim 9, wherein said image data (I) are divided into a plurality of frames (F), wherein each frame (F) comprises at least said first zone and said second zone,
wherein each frame (F) is relative to a respective time instant different from the time instant of a further frame (F),
and wherein said data processing unit (5) is configured for:
- reading a first frame of said plurality of frames (F),
- distinguishing, on said first frame, a first zone of said first frame corresponding to said first sub-field of view (sFOV1) and a second zone of said first frame corresponding to said second sub-field of view (sFOV2),
- performing, for said second sub-field of view (sFOV2), said graphical processing on the second zone of said first frame, obtaining a first auxiliary sub-frame,
- composing a first secondary image having said first zone of said first frame and said first auxiliary subframe,
- preferably, transmitting said first secondary image to a monitor (6) and/or selectively activating at least one between a sound and/or light emitter according to said image data (I),
- optionally performing said image identification algorithm on said first zone of said first frame and/or said second zone of said first frame;
and optionally is configured for:
- reading a second frame of said plurality of frames (F),
- distinguishing, on said second frame, a first zone of said second frame corresponding to said first sub-field of view (sFOV1) and a second zone of said second frame corresponding to said second sub-field of view (sFOV2),
- performing, for said second sub-field of view (sFOV2), said graphical processing on the second zone of said second frame, obtaining a second auxiliary subframe,
- composing a second secondary image having said first zone of said second frame and said second auxiliary subframe,
- preferably, transmitting said second secondary image to a monitor (6) and/or selectively activating at least one between a sound and/or light emitter according to said image data (I),
- optionally performing said image identification algorithm on said first zone of said second frame and/or said second zone of said second frame.
